# EUROPEAN PATENT APPLICATION

(11) **EP 4 628 388 A1**
(43) Date of publication of application: **08.10.2025**
(21) Application number: 25162602.4
(22) Date of filing: 10.03.2025
(51) Int. Cl.: B62B 7/06, B62B 7/14

(54) **THE FOLDABLE FRAME OF THE STROLLER AND THE METHOD OF FOLDING THE FOLDABLE FRAME OF THE STROLLER**

(30) Priority: 07.04.2024 PL 44821724
(71) Applicant: L. Karwala Spolka Komandytowa, 42-130 Szarlejka (PL)
(72) Inventor: KARWALA, Lukasz, 42-130 Wreczyca Wielka (PL)
(74) Representative: Korbela, Anna

(57) **Abstract**

The subject of the invention is a foldable frame of a stroller used for an articulated joint in the frame construction of the stroller - in particular a baby carriage. Furthermore, the invention comprises a method of folding the foldable frame of the stroller.

A foldable frame of a stroller consists of a left front leg and a right front leg, as well as a rear leg and a grip frame. The front and rear leg and the grip frame are connected to each other by an articulated joint enabling the grip frame, the front leg and the rear leg to be rotated. Moreover, the right and left elements are connected to each other by means of additional elements of the frame structure. The foldable frame of a stroller is **characterised by** the fact that an adapter (**4**) is attached to the rear leg (**6**) by means of a fastening element (**5**).

The method of folding a foldable frame of a stroller as described in claims 1 to 4 is **characterised by** the fact that it involves steps: the lock(s) securing the stroller against folding is/are released via the locking release (**12**); the grip arm (**3**) connects via an articulated joint (**2**) to the front leg (**1**) and the rear leg (**6**) and moves in the folding direction of the grip frame (**7**) towards the front leg (**1**), then the front leg (**1**) starts to move in the folding direction of the front leg (**8**) towards the rear leg (**2**), after which the grip arm (**3**) and the front leg (**1**) move together in the combined folding direction (**9**) towards the rear leg (**2**) until the frame structure of the stroller is completely folded.

## Description

### TECHNICAL FIELD

The subject of the invention is a foldable frame of a stroller used for an articulated joint in the frame construction of the stroller - in particular a baby carriage. Furthermore, the invention comprises a method of folding a foldable frame of a stroller.

### STATE OF THE ART

In the construction of the stroller, the method of its folding plays a special role, as this makes it easy to fold and move with the stroller, for example in the boot of vehicles.

A number of solutions are known for the adapters or articulated joints of a foldable frame of a stroller, used for an articulated joint. These solutions connect the tubes, both metal and plastic, and are a key element in the frame construction of a stroller, especially a baby carriage.

From the Polish patent description PL227057**,** an articulated joint of a foldable frame construction of a stroller is known, comprising a casing in which at least two ends of the longitudinal elements of the foldable frame of a stroller are embedded, the ends being provided with interlocking gear wheels mounted on mutually parallel axes and the gear wheels being fixedly connected to the ends. The joint is characterised in that the gear wheels are seated on the lateral edges of the ends of the first longitudinal member and the second longitudinal member of the foldable frame of the stroller and are rotatably housed in a casing, whereby the axes of the gear wheels are positioned in the casing and the first longitudinal member on the gear wheel side is provided with a projection running substantially parallel to the longitudinal axis of the first longitudinal member and forming an extension of the first longitudinal member, whereas the second longitudinal member is provided with a socket in which a locking element pushed outwards from the second longitudinal member is positioned slidingly along its longitudinal axis.

From another Polish patent description PL235508**,** an articulated joint of a foldable frame construction of a stroller is known, comprising a casing connected to one end of the joint, two ends of the longitudinal elements of the foldable frame of a stroller are placed in the casing, the ends being provided with interlocking gear wheels mounted on mutually parallel axes and the gear wheels being fixedly connected to the ends. The application is characterised in that in the casing, divided into an upper casing and a lower casing, on the inner side of the lower casing, a shaped channel is provided, the axis of symmetry of which is substantially parallel to the axis of the first gear wheel, seated at the end of the first longitudinal member and to the axis of the second gear wheel, seated at the end of the second longitudinal member of the foldable frame of the stroller, wherein a locking element is seated in the channel, having a cross-section corresponding to the cross-section of the channel and the locking element is supported by a spring, seated on an extension of the channel, pressing the locking element in the direction of the gear wheels, the first gear wheel having on its surface on the channel side a first side channel and the second gear wheel having on its surface on the channel side a second side channel, the shape of the first side channel and the second side channel corresponding to the shape of the portion of the channel corresponding substantially to that portion of the gear wheel above which the channel is located in the extended position of the joint.

From the Polish utility model description **W.111433,** a mechanism for folding a stroller is known, characterised in that it is constituted by a top grip and a bottom grip mounted slidingly on the side tubes of the stroller handle and, cooperating therewith, a side grip mounted on the tube of the stroller frame, the side grip being connected to a locking abutment mounted in a joint which is supported on the base of the stroller chassis. The ends of the stroller handle's tubes and the stroller frame's tubes are articulated in the joint. The upper grip is permanently connected to the linkage, the other end of which is connected to the lower grip. The side grip works in conjunction with the lower grip and incorporates a locking catch, in which there is a spring with movement restricted by the edge of the locking catch on one side and limited by a rivet on the other side. The essential function of the joint, which enables the folding of the structure of the stroller, is here provided by two relatively large independent elements, referred to as the joint and the base, to which the tubes of the structure of the stroller are attached. These elements work together to enable the stroller structure to be folded to a certain extent.

From the Polish utility model description PL66001Y**,** a joint is known, used as an element which articulates the tubes of the structure of the baby carriage, making it possible to fold and unfold the baby carriage. The joint consists of a cover connected pivotally to the tube of the structure of the baby carriage. The essential element connects the three tubes together and is connected rigidly to the fixed tube, the stem, and pivotally to the tube and pivotally to the movable tube. Inside the basic element there is a guide rigidly connected to the tube, inside of which there is a movable catch with a wedging notch. The abutment is connected to a linkage that allows the abutment to be pulled inside the guide and the connection to be unlocked. The second element that interacts with the guide is a pivotally connected (via a guide-connecting bar) grip, which is rigidly connected to the movable tube and which forms the end of the movable tube. In addition, there is a pin which enters the wedging notch of the abutment and a surface guiding on the pin.

From the Polish utility model description PL 62697 Y**,** an articulated joint is known of light and non-complex construction, intended for use in prams, in particular in baby carriages. This element consists of two arms cooperating with each other on a common axis, where the outer arm has a hole in its lateral part, while the cooperating inner arm is equipped in its lateral part with a spring projection corresponding to the hole.

From the Polish patent application description **P.396666,** a constructional assembly of a baby carriage's frame of simplified design is known, the arched grip of which folds forward. The constructional assembly of the folding of the baby carriage frame consists of arched front legs and arched rear legs, connected to each other by spreaders, and an arched grip with sliding and spring-loaded locking mechanisms for folding the frame which are fixed on the grip arms. The locking mechanisms are lashing brackets, connected by tendons to the corresponding sleeve locks.

The construction of previous solutions did not allow the handle of the stroller to fold in the direction of movement at the same time, i.e. the possibility of folding forwards with the simultaneous attachment of an adapter, in particular to the rear leg of the structure. Constructing the foldable frame of a stroller often required consideration of the repositioning of many components.

### DISCLOSURE OF THE INVENTION

The technical issue solved by the invention is the attachment of an adapter for a carrycot or child seat in such a way that the folded frame of the baby carriage - together with the foldable seating - takes up a minimum amount of space.

In the light of the state of the art described above, the purpose of the present invention is to overcome the previous disadvantages and to provide a frame of a stroller, especially a baby carriage, which, by mounting an adapter by means of a fastening element to the rear leg of the stroller frame, in an arrangement independent of the articulated joint, allows the optimal folding of the frame of the stroller together with the folded seat mounted in the adapter.

A foldable frame of a stroller consists of a left front leg and a right front leg, as well as a rear leg and a grip frame. The front and rear leg and the grip frame are connected to each other by an articulated joint enabling the grip frame, the front leg and the rear leg to be rotated. Moreover, the right and left elements are connected to each other by means of additional elements of the frame structure. The foldable frame of a stroller is **characterised by** the fact that an adapter is attached to the rear leg by means of a fastening element.

Preferably, an articulated joint pendulously connects the rear leg to the grip arm and to the front leg, the grip arm being pivotally connected in the direction of the rear leg, the direction according to the folding direction of the grip frame and the combined folding direction, and the front leg being pivotally connected in the direction of the rear leg, the direction according to the folding direction.

Preferably, the adapter and the fastening element form an integral part.

Preferably, there is a locking release in the grip frame connected by a linkage to the locking elements of the articulated joint.

Preferably, an attachment plug is disconnectedly inserted into the adapter and pivotally connected via a pivot axis to the seat and the backrest independently rotating from the seat.

The method of folding a foldable frame of a stroller as described above is characterised by the fact that it involves steps:
- the lock(s) securing the stroller against folding is/are released via the locking release;
- the grip arm connects via an articulated joint to the front leg and the rear leg and moves in the folding direction of the grip frame towards the front leg, then the front leg starts to move in the folding direction of the front leg towards the rear leg, after which the grip arm and the front leg move together in the combined folding direction towards the rear leg until the frame structure of the stroller is completely folded.
Preferably, the securing lock(s) is/are released and the seat, which is detachably attached via the attachment plugs in the adapters, is folded without being removed from the adapters so that the seat backrest is folded pivotally relative to the axis of rotation in the horizontal direction with the unfolded part of the seat, and the seat together with the backrest is then rotated on the axis of rotation relative to the attachment plug until the adjacent seat and backrest are optimally adhering to the rear leg of the frame of the stroller; the lock(s) securing the frame of the stroller against folding is/are released and the grip arm, which is connected via the articulated joint to the front leg and to the rear leg, moves in the folding direction of the grip frame towards the front leg, then the front leg moves in the folding direction of the front leg towards the rear leg and then the grip arm and the front leg move together in the combined folding direction towards the rear leg until the frame of the stroller is completely folded.

The advantage of the used solution is that the stroller frame can be folded in such a way that the articulated joint allows the frame structure to be folded in such a way that the grip frame moves towards the front legs of the stroller frame and then, together with the elements of the front legs of the stroller, moves towards the rear legs of the structure of the stroller. The independent fastening of the adapters via the fastening elements to the rear legs of the frame structure clearly makes the position of the folded seat mounted in the adapters independent of the other elements of the frame structure, in particular of the position of the articulated joint. The fastening element allows the adapter to be fastened to the rear leg in such a way that when the stroller frame is folded, the specific folded seat fastened in it always retracts optimally into the folded frame structure of the stroller.

Another advantage is the amount of space taken up by the folded stroller with the mounted folded seat, as it is considerably less than in the case of a design based on an adapter connected to an articulated joint (fixed position in relation to the articulated joint), where very often during the folding process the angle of the folded seat in relation to the folded frame structure of the stroller changes and when the stroller is folded to its maximum, the seat does not necessarily fit optimally into the folded frame of the stroller while at the same time it is correctly positioned when the stroller is unfolded.

An additional advantage is the use of a seat in which the attachment plug, which connects detachably the seat via an adapter with the stroller frame, is mounted pivotally relative to the backrest and seat, i.e. the essentially horizontal part when the stroller is unfolded. Moreover, the backrest is pivotally mounted in relation to the seat. This arrangement of the seat further optimises adhesion of the folded seat to the folded stroller frame.

An undoubted advantage is the simplification of the structure, as the adapter and the articulated joint can be manufactured separately from different materials, so there is a greater durability of the individual components. In addition, the design/modification of new elements in the structure of the stroller removes factors that influence the position of the folded seat, as it is always dependent solely on the rear leg.

Another advantage is the simplicity of the structure, as there are no complicated components in the articulated joint enabling the connection of the seat or other module for carrying the child. A key advantage is that the loads associated with the seat or carrycot with a child are transferred directly to the structural components, so there is no load on the articulated joint, which is less likely to fail. In addition, this solution allows the adapter to be easily replaced in the event of damage, or a new version of the adapter or a third-party adapter can easily be used without having to redesign the articulated joint.

This solution allows an optimal positioning of the adapter in relation to the rear leg of the stroller frame so that the folded seat of the stroller, fixed in the adapters, is as far as possible hidden in the folded frame of the stroller. This solution avoids the need to take into account the repositioning of the adapter when the frame is folded, as was previously the case when the adapter was attached to the articulated joint (or when it was an integral part of the articulated joint).

### BRIEF DESCRIPTION OF THE FIGURES

For a better understanding of the invention, it has been presented in the embodiments and in the attached figures, in which:
**Fig. 1****-** shows a partial, perspective view of the folded stroller frame with a fastening element;
**Fig. 2** **-** shows a partial, perspective view of the folded stroller frame with a fastening element - another perspective;
**Fig. 3** **-** shows the attachment of the fastening element to the foldable frame;
**Fig. 4** **-** shows the fastening element - side views;
**Fig. 5** - shows the fastening element - perspective view;
**Fig. 6** - shows the folded seat mounted detachably to the folded stroller frame - side view presenting the phases of rotation of the backrest;
**Fig. 7** - shows the folded seat mounted detachably to the folded stroller frame - side view presenting the phase of rotation of the backrest with the seat relative to the attachment plug;
**Fig. 8** **-** shows the partial, perspective view of the folded stroller frame with a fastening element and an unfastened part of the seat.

The foldable frame and the structural elements of the foldable frame of the stroller and the seat in the attached figures are only for illustration, while the final shape together with the precise way of attaching the adapter will depend on the particular model of the stroller - in particular on the specific foldable seat attached to the structure of the stroller frame.

### EMBODIMENTS OF THE INVENTION

The following embodiments illustrate the invention without limiting it in any way.

### Example 1: Foldable frame of a stroller.

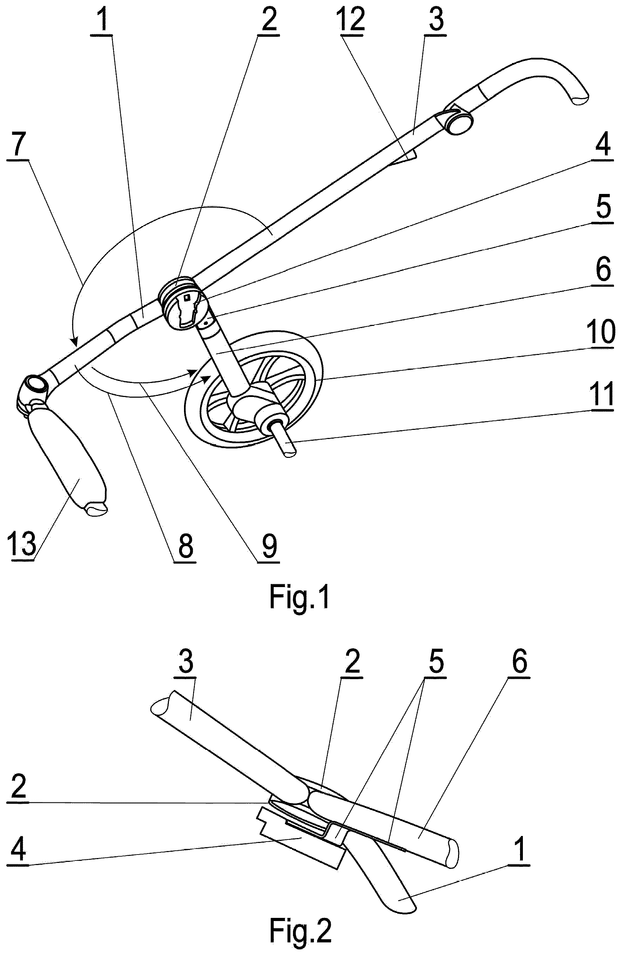

**Fig. 1** shows one part of a foldable frame of a stroller, which consists of two front legs **1 -** left and right - and two rear legs **6** - left and right - with elements attached at the ends of the legs to enable the fastening of the wheels **10** and lower elements connecting the structure of the stroller such as a footrest **13,** or a profile **11** cooperating with the braking system of the stroller/covering the elements of the braking system of the stroller.

The front leg **1,** the rear leg **6** and the grip frame **3,** both on the left and right side of the structure of the stroller frame, are connected to each other by an articulated joint **2,** whereby an adapter **4** is attached to the rear leg **6** by means of a fastening element **5,** which adapter **4** serves to insert a seat, including a foldable seat or other module enabling the carrying of a child.

In the grip frame **3** there is a locking release **12** connected by a linkage to the locking elements of the articulated joint **2,** which allows the individual elements of the articulated joint **2** to rotate relative to each other and thus to move the grip frame **3** towards the front leg **1,** and then to move the grip frame **3** and the front leg 1 together towards the rear leg **2.** When the stroller structure is folded to allow easy transport of the stroller - the folded seat, fixed in the adapters 4 attached via fastening elements **5** to the rear legs **6,** fits optimally into the folded frame of the stroller. The positioning of the stroller seat is solely dependent on the rear leg(s) **6** of the structure of the stroller.

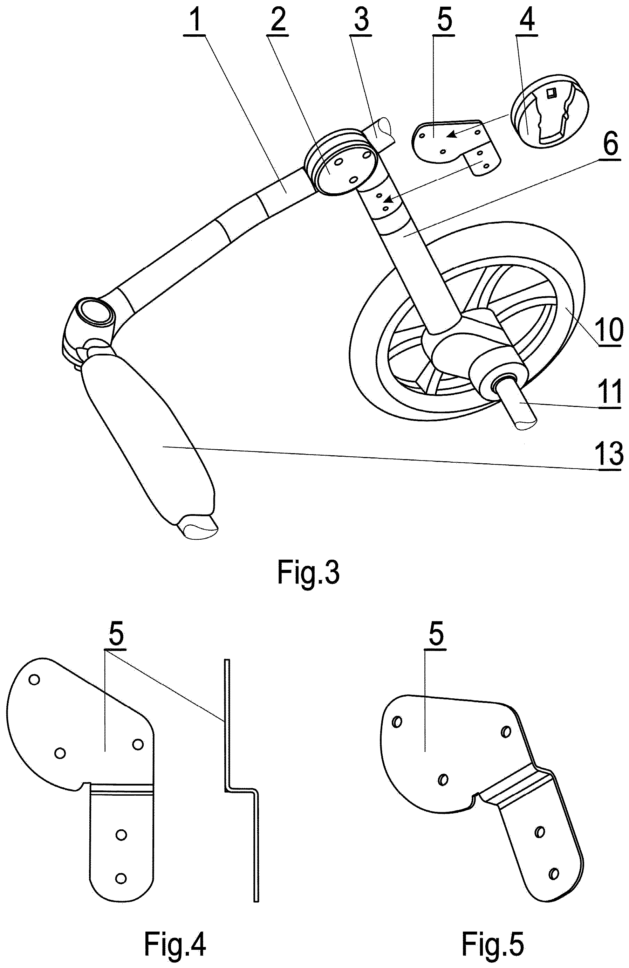

**Fig. 2** shows how the adapter **4** is attached to the rear leg **6,** through a fastening element **5,** made of a metal sheet profiled in a 'zigzag' shape. The fastening element **5** is further shown in **fig. 3** and **fig. 4****.**

One side of the fastening element 5 is attached to the rear leg **6,** while the other side is attached to the adapter **4.**

### Example 2: Foldable frame of a stroller.

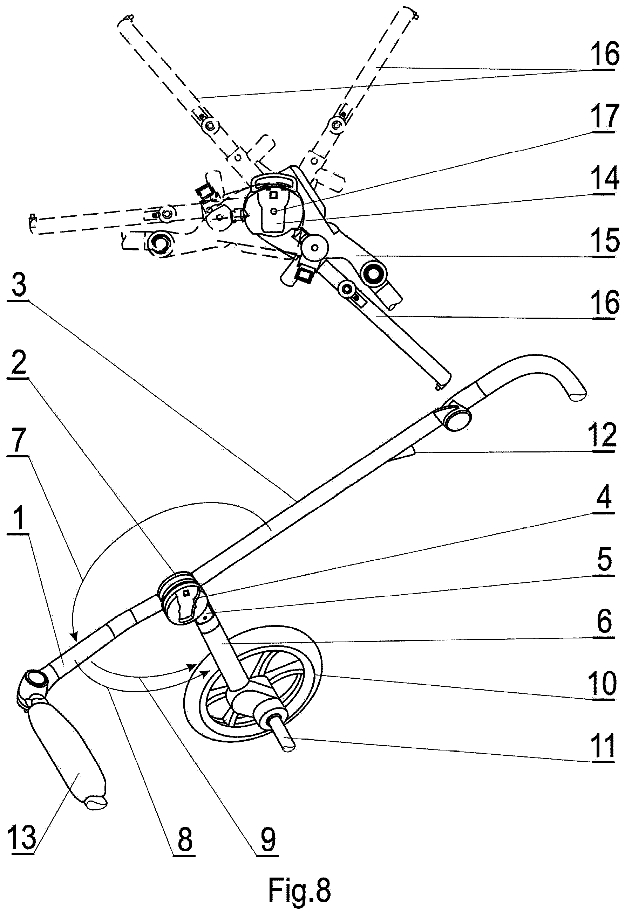

The foldable frame of the stroller is identical to that shown in **embodiment 1,** wherein, as shown in **fig. 8****,** on the right and left side of the frame of the stroller, a seat **15** with a foldable backrest **16** is detachably attached to the adapter **4** via an attachment plug **14.**

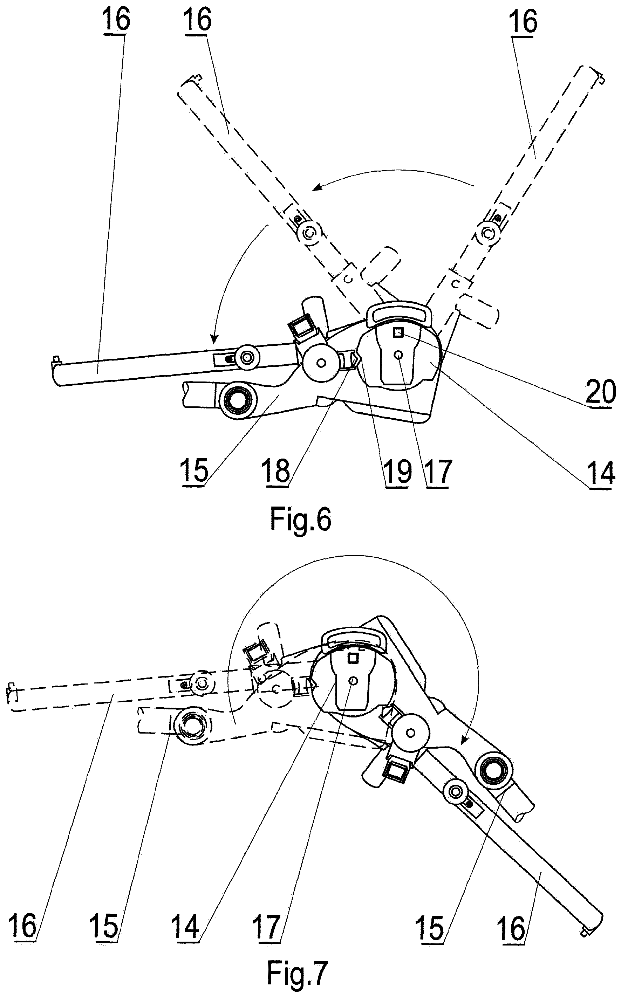

As shown in **fig. 6****,** the backrest **16** of the seat folds pivotally relative to the axis of rotation **17** towards the substantially horizontal (with the seat unfolded) part of the seat **15** and then, as shown in **fig. 7****,** the seat **15** together with the backrest **16** pivot on the axis of rotation **17** with respect to the attachment plug **14.** Furthermore, the left and right lateral parts of the seat **15** have a movable lock **18** which slides into the recess **19** of the attachment plug **14** to prevent folding of the unfolded seat and a catch **20** which blocks the sliding of the attachment plug **14** out of the adapter **4.** Without having to be removed, the folded seat is optimally integrated into and adheres to the folded stroller frame thanks to the attachment plug **14,** which pivots independently in relation to the seat **15** and backrest **16.**

### Example 3: Foldable frame of a stroller.

The foldable frame of the stroller is the same as that shown in **embodiment 2,** with the adapter **4** and the fastening element **5** being one integral module attached to the rear leg **6** of the frame structure of the stroller.

### Example 4: Method of folding a foldable frame of a stroller as described in embodiment 1.

Method of folding a foldable frame of a stroller as described in **embodiment** 1, which includes the steps:
- the seat mounted in the adapters **4** is folded without removing it from adapters **4;**
- locking release **12** is released;
- when the locks are released, the grip arm **3** connecting via the articulated joint **2** with the front leg **1** and the rear leg **6** moves in the folding direction of the grip frame **7** towards the front leg 1, then the front leg 1 starts to move in the folding direction of the front leg **8** towards the rear leg **2** after which the grip arm **3** and the front leg **1** move together in the combined folding direction **9** towards the rear leg **2** until the frame structure of the stroller is completely folded.

The process takes place while keeping the position of the adapter 4 invariable in relation to the rear leg **6** and independent of the position and rotation of the element of the articulated joint **2.**

### Example 5: Method of folding a foldable frame of a stroller as described in embodiment 2.

Method of folding a foldable frame of a stroller as described in **embodiment 4,** in the step of which:
- the seat is detachably fixed by the attachment plugs **14** in the adapters **4** without being removed from the adapters **4** - so that, as shown in **fig. 6****,** the backrest **16** of the seat is rotated relative to the axis of rotation **17** towards the substantially horizontal (with the seat folded out) part of the seat **15** and then, as shown in **fig. 7****,** the seat **15,** together with the backrest **16,** is rotated on the axis of rotation **17** relative to the attachment plug **14.** As a result of the rotation, the adjacent seat **15** and backrest **16** are optimally adjacent to the rear leg **6** of the stroller frame.

### LIST OF ELEMENTS:

**1.** Front leg;
**2.** Articulated joint;
**3.** Grip frame;
**4.** Adapter;
**5.** Fastening element;
**6.** Rear leg;
**7.** Folding direction of grip frame;
**8.** Folding direction of front leg;
**9.** Combined folding direction;
**10.** Wheel;
**11.** Profile;
**12.** Locking release;
**13.** Footrest;
**14.** Attachment plug;
**15.** Seat;
**16.** Backrest;
**17.** Axis of rotation;
**18.** Lock;
**19.** Recess;
**20.** Catch.

## Claims

1. A foldable frame of a stroller consisting of a left front leg and a right front leg, as well as a rear leg and a grip frame, wherein the front and rear leg and the grip frame are connected to each other by an articulated joint enabling the grip frame, the front leg and the rear leg to be rotated, moreover, the right and left elements are connected to each other by means of additional elements of the frame structure, **characterised in that** an adapter **(4)** is attached to the rear leg **(6)** by means of a fastening element **(5).**

2. The foldable frame of a stroller according to claim 1, **characterised in that** the articulated joint **(2)** pendulously connects the rear leg **(6)** to the grip arm **(3)** and to the front leg **(1),** the grip arm **(3)** being pivotally connected in the direction of the rear leg **(6),** the direction according to the folding direction of the grip frame **(7)** and the combined folding direction **(9),** and the front leg (1) being pivotally connected in the direction of the rear leg **(6),** the direction according to the folding direction **(8).**

3. The foldable frame of a stroller according to claim 1 or 2, **characterised in that** the adapter **(4)** and the fastening element **(5)** form an integral part.

4. The foldable frame of a stroller according to claim 1-3, **characterised in that** in the grip frame **(3)** there is a locking release **(12)** connected by a linkage to the locking elements of the articulated joint **(2).**

5. The foldable frame of a stroller according to claim 1-4, **characterised in that** an attachment plug **(14)** is disconnectedly inserted into the adapter **(4)** and the attachment plug **(14)** is pivotally connected via a pivot axis **(17)** to the seat **(15)** and the backrest **(16)** independently rotating from the seat **(15).**

6. A method of folding a foldable frame of a stroller as described in claims 1-4, **characterised in that** it involves steps:
- the lock(s) securing the stroller against folding is/are released via the locking release **(12);**
- the grip arm **(3)** connects via an articulated joint **(2)** to the front leg **(1)** and the rear leg **(6)** and moves in the folding direction of the grip frame **(7)** towards the front leg **(1),** then the front leg **(1)** starts to move in the folding direction of the front leg **(8)** towards the rear leg **(2),** after which the grip arm **(3)** and the front leg **(1)** move together in the combined folding direction **(9)** towards the rear leg **(2)** until the frame structure of the stroller is completely folded.

7. The method of folding the foldable frame of a stroller as described in claim 6, **characterised in that:**
- the securing lock(s) is/are released and the seat, which is detachably attached via the attachment plugs **(14)** in the adapters **(4),** is folded without being removed from the adapters **(4)** so that the seat backrest **(16)** is folded pivotally relative to the axis of rotation **(17)** in the horizontal direction with the unfolded part of the seat **(15),** and the seat **(15)** together with the backrest **(16)** is then rotated on the axis of rotation **(17)** relative to the attachment plug **(14)** until the adjacent seat **(15)** and backrest **(16)** are optimally adhering to the rear leg **(6)** of the frame of the stroller, the lock(s) securing the frame of the stroller against folding is/are released and the grip arm **(3),** which is connected via the articulated joint **(2)** to the front leg **(1)** and the rear leg **(6),** moves in the folding direction of the grip frame **(7)** towards the front leg **(1),** then the front leg **(1)** moves in the folding direction of the front leg **(8)** towards the rear leg **(2)** and then the grip arm **(3)** and the front leg **(1)** move together in the combined folding direction **(9)** towards the rear leg **(2)** until the frame of the stroller is completely folded.
